# EUROPEAN PATENT APPLICATION

(11) **EP 1 211 620 A1**
(43) Date of publication of application: **05.06.2002**
(21) Application number: 01127268.9
(22) Date of filing: 16.11.2001
(51) Int. Cl.: G06F 17/60

(54) **Electronic commercial transaction system, server, user terminal, record medium, and stock management method**

(30) Priority: 29.11.2000 JP 2000362610; 19.12.2000 JP 2000384993; 28.12.2000 JP 2000400919
(71) Applicant: HONDA GIKEN KOGYO KABUSHIKI KAISHA, Minato-ku Tokyo (JP)
(72) Inventor: Fukuda, Takashi, Minato-ku, Tokyo (JP); Fujiwara, Hiroyuki, Minato-ku, Tokyo (JP)
(74) Representative: Prechtel, Jörg, Dipl.-Phys. Dr.

(57) **Abstract**

An electronic commercial transaction system, and a server, a user terminal and a record medium for the system are provided. The user can purchase a commodity easily and receive a careful inspection and repair of the commodity conveniently. The server comprises a commodity data base, a dealing shop data base, commodity specifying means, dealing shop extracting means, and server side transmission means for transmitting commodity data of a specified commodity, dealing shop data of an extracted dealing shop and an order sheet to the user terminal. The user terminal comprises display means for displaying the commodity data, the dealing shop data and the order sheet on a display surface, and user side transmission means for transmitting commodity specifying information, destination information and order sheet input information to the server.

By a stock management method wherein stocks relating to EC commercial flow and stocks relating to conventional commercial flow are managed separately, flow of commodities can be made smooth.

## Description

### BACKGROUND OF THE INVENTION

### Field of the Invention

The present invention relates to a commercial transaction system utilizing a network, a server and a user terminal which are elements constituting the system, a medium recorded with a program for controlling the server, and a stock management method.

In general, a commodity is purchased by a user at a store front of a selling shop, and when inspection or repair of the purchased commodity becomes necessary, the user brings the commodity in the selling shop to request inspection or repair.

Generally, the commodity brought in the selling shop is sent to a repair section of a maker to be repaired, and the user again go to the selling shop for receiving the commodity returned from the maker.

In an electronic commercial transaction utilizing a network, the user need not go to the selling shop to purchase the commodity, but can purchase the commodity seated at his home conveniently. However, regarding inspection or repair, the user must connect with the repair section of the maker directly, and must carry the commodity somewhere or let someone come for receiving the commodity.

When the commodity is heavy, it is difficult to carry it. Even when someone comes to receive the commodity, sometimes it costs because of a long distance.

Further, since the commodity is sent to the repair section of the maker after all, it takes many days until the commodity is inspected or repaired and returns to the user.

If a selling shop from which a consignor purchased a commodity is far from a consignee, it is inconvenient for the consignee to request inspection or repair.

If a purchaser or a consignee loses a sale written guarantee or a long time has passed since purchase, especially in case of a commodity purchased by electronic commercial transaction, information of other party to be connected is lost and it takes time to find out the party.

Recently, EC commercial flow according to the electronic commercial transaction using a network has been popularized, in addition to conventional commercial flow in which a commodity soled wholesale to a selling shop is directly sold to a consumer coming to the selling shop.

Some commodities suit the conventional commercial flow and other commodities suit the EC commercial flow. Generally the commercial flows are determined according to kinds of commodities.

However, some selling shops use the conventional commercial flow and the EC commercial flow together regarding the same commodity. In this case, the commodity is sold from a common stock in either commercial flow.

In the conventional commercial flow, a large quantity of commodities are sold with a relatively long cycle, and in the EC commercial flow, a small quantity of commodities are sold with a short cycle. Therefore, if transaction relating to the EC commercial flow takes place immediately after a large quantity selling, sometimes it is impossible to cope with soon.

Even when the maker carries out transaction according to the EC commercial flow as a server, if an order relating to the EC commercial flow takes place immediately after a large quantity order from a selling shop according to the conventional commercial flow, it is feared that the commodity can not be forwarded soon.

The present invention is accomplished in view of the foregoing, and an object of the invention is to provide an electronic commercial transaction system very convenient for users in which purchase, inspection and repair of commodities are easy. Another object of the invention is to provide a server, a user terminal and record medium for the system and a stock management method capable of making flow of commodity smooth.

### SUMMARY OF THE INVENTION

In order to achieve the above object, the present invention provides an electronic commercial transaction system including a server and a plurality of user terminals capable of communicating with each other through a network, said server comprising: a commodity data base having commodity data of various kinds of commodities recorded so as to be retrieved; a dealing shop data base having dealing shop data of dealing shops carrying out inspection, repair and delivery of said commodities including address recorded so as to be retrieved; commodity specifying means for referring to said commodity data base based on commodity specifying information transmitted from said user terminal to specify a necessary commodity; dealing shop extracting means for referring to said dealing shop data base based on destination information transmitted from said user terminal to extract at least a dealing shop in neighborhood of said destination; and server side transmission means for transmitting commodity data of said commodity specified by said commodity specifying means, dealing shop data of said dealing shop extracted by said dealing shop extracting means and an order sheet to said user terminal, said user terminal comprising: display means for displaying said commodity data, said dealing shop data and said order sheet transmitted from said server side transmission means on a display surface; and user terminal side transmission means for transmitting said commodity specifying information, said destination information and an order sheet input information to said server.

A user can order a necessary commodity easily, by specifying the commodity and transmitting an order sheet inputted with necessary information from the user terminal utilizing a network. Since the server refers to the dealing shop data base based on destination information transmitted from the user terminal to extract a dealing shop in neighborhood of the destination and the extracted dealing shop is displayed on the display means of the user terminal, the user can know the most convenient dealing shop and receive setup or the like of the commodity from the dealing shop, so that he can purchase the commodity very easily.

When the user wants to inspect or repair the purchased commodity, he can leave it to the dealing shop so that he can receive a careful after-service very conveniently.

The dealing shop data of the dealing shop extracted by the dealing shop extracting means may include a map of neighborhood of the destination showing places of the destination and the extracted dealing shop, and the display means of the user terminal may display the map.

Since the map of neighborhood of the destination showing places of the destination and the extracted dealing shop is displayed on the display means of the user terminal, even if there are plural dealing shops displayed, the nearest dealing shop can be selected by grasping positional relation among the dealing shops and the destination visually and place of the nearest dealing shop can be grasped by sense.

The present invention provides a server comprising: a commodity data base having commodity data of various kinds of commodities recorded so as to be retrieved; a dealing shop data base having dealing shop data of dealing shops carrying out inspection, repair and delivery of said commodities including address recorded so as to be retrieved; commodity specifying means for referring to said commodity data base based on commodity specifying information transmitted from a user terminal through a network to specify a necessary commodity; dealing shop extracting means for referring to said dealing shop data base based on destination information transmitted from said user terminal through said network to extract at least a dealer shop in neighborhood of said destination; and server side transmission means for transmitting commodity data of said commodity specified by said commodity specifying means, dealing shop data of said dealing shop extracted by said dealing shop extracting means and an order sheet to said user terminal.

Since the server has the commodity data base for retrieving and specifying a commodity wanted by a user and the dealing shop data base for retrieving at least a dealing shop in neighborhood of a destination, and transmits information regarding the commodity and the dealing shop, the user can order and purchase a necessary commodity easily, selact a near and convenient dealing shop easily and leave inspection and repair of the commodity to the dealing shop conveniently.

The server may have dealing shop specifying means for specifying a necessary dealing shop from among the dealing shops extracted by the dealing shop extracting means based on dealing shop specifying information transmitted from the user terminal through the network, and the server side transmission means may transmit detailed data of the dealing shop specified by the dealing shop specifying means to the user terminal.

Since the server has dealing shop specifying means for specifying a necessary dealing shop from among the dealing shops extracted by the dealing shop extracting means based on dealing shop specifying means transmitted from the user terminal, and transmits detailed data of the specified dealing shop to the user terminal, the user can know detail of the dealing shop to selact the most convenient dealing shop finally.

The dealing shop data of the dealing shop extracted by the dealing shop extracting means may include a map of neighborhood of the destination showing places of the destination and the extracted dealing shop.

Since the dealing shop data includes the map of neighborhood of the destination showing places of the destination and the extracted dealing shop, and the map is transmitted to the user terminal for display, even if there are plural dealing shops displayed, the nearest dealing shop can be selected by grasping positional relation among the dealing shops and the destination visually and place of the nearest dealing shop can be grasped by sense.

The present invention provides a user terminal comprising: access means for obtaining access to a server including a commodity data base having commodity data of various kinds of commodities recorded so as to be retrieved, and dealing shop data base having dealing shop data of dealing shops carrying out inspection, repair and delivery of said commodities including address recorded so as to be retrieved; display means for displaying said commodity data, said dealing shop data and an order sheet transmitted from said server on a display surface; and user side transmission means for transmitting commodity specifying information, destination information and order sheet input information to said server through said network.

The user can specify a necessary commodity and select the most convenient dealing shop by obtaining access to the server having the commodity data base and the dealing shop data base, transmitting commodity specifying information and destination information and watching displayed commodity data and dealing shop data. Therefore, purchase is easy, and inspection and maintenance of the purchased commodity can be left to the dealing shop conveniently.

The user side transmission means may transmit dealing shop specifying information for specifying a dealing shop, and the display means may display detailed data of the specified dealing shop.

Since the user terminal transmits dealing shop specifying information to the server having the dealing shop data base, and displays detailed data of the retrieved and specified dealing shop, the user can know detail of the dealing shop and select the most convenient dealing shop finally.

The dealing shop data may include a map of neighborhood of the destination showing places of the destination and the extracted dealing shop, and the display means may display the map.

Since the map of neighborhood of the destination showing places of the destination and the extracted dealing shop is displayed by the display means, even if there are plural dealing shops displayed, the nearest dealing shop can be selected by grasping positional relation among the dealing shops and the destination visually and place of the nearest dealing shop can be grasped by sense.

The present invention provides a record medium housing a program for controlling a computer so that: said computer refers to a commodity data base based on commodity specifying information transmitted from a user terminal to specify a necessary commodity and transmits commodity data of said necessary commodity through a network; said computer refers to a dealing shop data base based on destination information transmitted from said user terminal to extract at least a dealing shop in neighborhood of said destination and transmits dealing shop data of said dealing shop through said network; and said computer transmits an order sheet through said network.

Since the record medium controls the computer so that the computer refers to the commodity data base based on commodity specifying information transmitted from the user terminal, transmits retrieved commodity data, refers to the dealing shop data base based on destination information transmitted from the user terminal, transmits retrieved dealing shop data and transmits the order sheet, the user can specify and order a necessary commodity easily, select a dealing shop most convenient for purchase easily and leave inspection and repair of the purchased commodity to the dealing shop conveniently.

The present invention provides a record medium housing a program for controlling a computer so that: said computer refers to a commodity data base based on commodity specifying information transmitted from a user terminal to specify a necessary commodity and transmits commodity data of said necessary commodity through a network; said computer refers to a dealing shop data base based on destination information transmitted from said user terminal to extract at least a dealing shop in neighborhood of said destination and transmits dealing shop data of said dealing shop through said network; said computer specifies a necessary dealing shop from among said extracted dealing shops based on dealing shop specifying information transmitted from said user terminal and transmits dealing shop detailed data of said specified dealing shop through said network; and said computer transmits an order sheet through said network.

Since the record medium controls the computer so that the computer refers to a commodity data base based on commodity specifying information transmitted from the user terminal, transmits retrieved commodity data, refers to the dealing shop data base based on destination information, transmits retrieved dealing shop data, specifies a necessary dealing shop from among extracted dealing shops based on dealing shop specifying information, transmits dealing shop detailed data and transmits the order sheet, the user can specify and order a necessary commodity easily, select a dealing shop most convenient for purchase easily and leave inspection and repair of the purchased commodity to the dealing shop conveniently.

The present invention provides an electronic commercial transaction system including a server and a plurality of user terminals capable of communicating with each other through a network, said server comprising: a commodity data base having commodity data of various kinds of commodities recorded so as to be retrieved; a dealing shop data base having dealing shop data of dealing shops carrying out inspection, repair and delivery of said commodities including address recorded so as to be retrieved; commodity specifying means for referring to said commodity data base based on commodity specifying information regarding a commodity to be dealt with as a gift transmitted from said user terminal to specify a necessary commodity; dealing shop extracting means for referring to said dealing shop data base based on consignee information regarding a consignee of said gift transmitted from said user terminal to extract at least a dealing shop in neighborhood of said consignee; and sever side transmission means for transmitting commodity data of said commodity specified by said commodity specifying means, dealing shop data of said dealing shop extracted by said dealing shop extracting means and an order sheet to said user terminal, said user terminal comprising: display means for displaying said commodity data, said dealing shop data and said order sheet transmitted from said server side transmission means on a display surface, and user terminal side trans mission means for transmitting said commodity specifying information, said consignee information and an order sheet input information to said server.

A user who is a consignor of the gift can order a necessary commodity easily, by specifying the necessary commodity and transmitting an order sheet inputted with information of the consignee of the gift from the user terminal utilizing a network. Since the server refers to the dealing shop data base based on the information of the consignee of the gift to extract a dealing shop in neighborhood of the consignee and the extracted dealing shop is displayed by the display means of the user terminal, the user can select a dealing shop which is considered to be most convenient for the consignee, and can purchase and send the gift easily.

When the consignee wants to inspect or repair the gifted commodity, he can leave it to the dealing shop so that he can receive a careful after service very conveniently.

The dealing shop data of the dealing shop extracted by the dealing shop extracting means may include a map of neighborhood of the consignee showing places of the consignee and the dealing shop, and the display means of the user terminal displays the map.

Since the map of neighborhood of the consignee showing locations of the consignee and the dealing shops is displayed by the display means of the user terminal, even if there are plural dealing shops displayed, positional relation among the dealing shops and the consignee can be grasped visually and a dealing shop considered to be most convenient for the consignee can be selected easily.

The present invention provides a server comprising: a commodity data base having commodity data of various kinds of commodities recorded so as to be retrieved; a dealing shop data base having dealing shop data of dealing shops carrying out inspection, repair and delivery of said commodities including addresses recorded so as to be retrieved; commodity specifying means for referring to said commodity data base based on commodity specifying information regarding a commodity to be dealt with as a gift transmitted from a user terminal to specify a necessary commodity; dealing shop extracting means for referring to said dealing shop data base based on consignee information regarding a consignee of said gift transmitted from said user terminal to extract at least a dealing shop in neighborhood of said consignee; and server side transmission means for transmitting commodity data of said commodity specified by said commodity specifying means, dealing shop data of said dealing shop extracted by said dealing shop extracting means and an order sheet to said user terminal.

Since the server has the commodity data base for retrieving and specifying a commodity wanted by a user and the dealing shop data base for retrieving at least a dealing shop in neighborhood of a consignee, and transmits information regarding the commodity and the dealing shop, the user can order a necessary gift and have the gift delivered easily, and can select a dealing shop which is near and convenient for the consignee easily. The consignee can leave inspection and repair of the gifted commodity to the dealing shop conveniently.

The server may have dealing shop specifying means for specifying a necessary dealing shop from among dealing shops extracted by the dealing shop extracting means based on dealing shop specifying information transmitted from the user terminal through a network, and the server side transmission means may transmit detailed data of the dealing shop specified by the dealing shop specifying means to the user terminal.

Since the server has dealing shop specifying means for specifying a necessary dealing shop from among the dealing shops extracted by the dealing shop extracting means based on dealing shop specifying information transmitted from the user terminal, and transmits detailed data of the specified dealing shop to the user terminal, the user can know detail of the dealing shops to select the most convenient shop finally.

The dealing shop data of the dealing shop extracted by the dealing shop extracting means may include a map of neighborhood of the consignee showing places of the consignee and the dealing shop.

Since the dealing shop data includes the map of neighborhood of the consignee showing places of the consignee and the extracted dealing shop, and the map is transmitted to the user terminal for display, even if there are plural dealing shops displayed, the nearest dealing shop can be selected easily by grasping positional relation among the dealing shops and the consignee visually.

The present invention provides a user terminal comprising: access means for obtaining access to a server including a commodity data base having commodity data of various kinds of commodities recorded so as to be retrieved, and dealing shop data base having dealing shop data of dealing shops carrying out inspection, repair and delivery of said commodities including addresses recorded so as to be retrieved; display means for displaying said commodity data, said dealing shop data and an order sheet transmitted from said server on a display surface; and user side transmission means for transmitting commodity specifying information for specifying a necessary commodity from said commodity data base, consignee information for extracting a dealing shop in neighborhood of said consignee of said gift from said dealing shop data base and an order sheet input information through a network to said server.

The user can specify a necessary commodity and select a dealing shop considered to be most convenient for the consignee, by obtaining access to the server having the commodity data base and the dealing shop data base, transmitting commodity specifying information and consignee information and watching displayed commodity data and dealing shop data. Therefore, the user can purchase the gift easily and the consignee can leave inspection and maintenance of the gift to the dealing shop conveniently.

The user side transmission means may transmit dealing shop specifying information for specifying a dealing shop, and the display means may display detailed data of the specified dealing shop.

Since the user terminal transmits dealing shop specifying information to the server having the dealing shop data base, and displays detailed data of the retrieved and specified dealing shop, the user can know detail of the dealing shop and select a dealing shop considered to be most convenient for the consignee.

The dealing shop data may include a map of neighborhood of the consignee showing places of the consignee and the extracted dealing shop, and the display means may display the map.

Since the map of neighborhood of the consignee showing places of the consignee and the extracted dealing shop is displayed by the display means, even if there are plural dealing shops displayed, the user can select a dealing shop considered to be most convenient for the consignee easily by grasping positional relation among the dealing shops and the consignee visually.

The present invention provides a record medium housing a program for controlling a computer so that: said computer refers to a commodity data base based on commodity specifying information regarding a commodity to be dealt with as a gift transmitted from a user terminal to specify a necessary commodity and transmits commodity data of said necessary commodity through a network; said computer refers to a dealing shop data base based on consignee information regarding a consignee of said gift transmitted from said user terminal to extract at least a dealing shop in neighborhood of said consignee and transmits dealing shop data of said extracted dealing shop through said network; and said computer transmits an order sheet through said network.

Since the record medium controls the computer so that the computer refers to the commodity data base based on commodity specifying information transmitted from the user terminal, transmits retrieved commodity data, refers to the dealing shop data base based on consignee information transmitted from the user terminal, transmits retrieved dealing shop data and transmits the order sheet, the user can specify and order a necessary commodity and have the commodity delivered to the consignee easily. Further, the user can select a dealing shop considered to be most convenient for the consignee. The consignee can leave inspection and repair of the gifted commodity to the dealing shop conveniently.

The present invention provides a record medium housing a program for controlling a computer so that: said computer refers to a commodity data base based on commodity specifying information regarding a commodity to be dealt with as a gift transmitted from a user terminal to specify a necessary commodity and transmits commodity data of said necessary commodity through a network; said computer refers to a dealing shop data base based on consignee information regarding a consignee of said gift transmitted from said user terminal to extract at least a dealing shop in neighborhood of said consignee and transmits dealing shop data of said extracted dealing shop through said network; said computer specifies a necessary dealing shop from among said extracted shops based on dealing shop specifying information transmitted from said user terminal and transmits dealing shop detailed data of said necessary dealing shop through said network; and said computer transmits an order sheet through said network.

Since the record medium controls the computer so that the computer refers to a commodity data base based on commodity specifying information transmitted from a user terminal, transmits retrieved commodity data, refers to a dealing shop data base based on consignee information, transmits retrieved dealing shop data, specifies a necessary dealing shop from among extracted dealing shops based on dealing shop specifying information, transmits dealing shop detailed data and transmits an order sheet, the user can specify and order a necessary gift easily, and can select a dealing shop considered to be most convenient for the consignee properly. The consignee can leave inspection and repair of the gifted commodity to the dealing shop conveniently.

The present invention provides a stock management method, wherein an EC commercial flow in which electronic commercial transaction is carried out between a server and a plurality of user terminals capable of communicating with each other through a net work to determine a commodity, a transactor and a transacting manner, and a conventional commercial flow in which a commodity sold wholesale to a selling shop is sold directly, coexist, and stocks relating to said EC commercial flow and stocks relating to said conventional commercial flow are managed separately.

Since stocks relating to the EC commercial flow and stocks relating to the conventional commercial flow are managed separately, even if transaction relating to the EC commercial flow takes place immediately after a large quantity selling according to the conventional commercial flow, the commodity can be sold from stocks ensured separately, so that delay of delivery can be prevented and smooth flow of commodities can be ensured.

In the above-mentioned stock management, said server may comprise: a commodity data base having commodity data of various kinds of commodities recorded so as to be retrieved; a dealing shop data base having dealing shop data of dealing shops carrying out inspection, repair and delivery of said commodities including address recorded so as to be retrieved; commodity specifying means for referring to said commodity data base based on commodity specifying information transmitted from said user terminal to specify a necessary commodity; dealing shop extracting means for referring to said dealing shop data base based on destination information transmitted from said user terminal to extract at least a dealing shop in neighborhood of said destination; and server side transmission means for transmitting commodity data of said commodity specified by said commodity specifying means, dealing shop data of said dealing shop extracted by said dealing shop extracting means and an order sheet to said user terminal, and said user terminal may comprise: display means for displaying said commodity data, said dealing shop data and said order sheet transmitted from said server side transmission means on a display surface; and user terminal side transmission means for transmitting said commodity specifying information, said destination information and an order sheet input information to said server.

In the EC commercial flow, a user can order a necessary commodity easily by specifying the commodity and transmitting an order sheet inputted with necessary information from the user terminal utilizing a network. Since the server refers to the dealing shop data base based on destination information transmitted from the user terminal to extract a dealing shop in neighborhood of the destination and the extracted dealing shop is displayed on display means of the user terminal, the user can know the most convenient dealing shop and receive setup or the like of the commodity from the dealing shop without delay. Thus the user can purchase the commodity very easily.

When the user wants to inspect or repair the purchased commodity, he can leave it to the dealing shop so that he can receive a careful after service very conveniently.

The dealing shop data of the dealing shop extracted by the dealing shop extracting means may include a map of neighborhood of the destination showing places of the destination and the extracted dealing shop, and the display means of the user terminal may display the map.

Since the map of neighborhood of the destination showing places of the destination and the extracted dealing shop is displayed on the display means of the user terminal, even if there are plural dealing shops displayed, the nearest dealing shop can be selected by grasping positional relation among the dealing shops and the destination visually and place of the nearest dealing shop can be grasped by sense.

### BRIEF DESCRIPTION OF THE DRAWINGS

Fig. 1 is a view showing an entire constitution of an electronic commercial transaction system according to an embodiment of the present invention;
Fig. 2 is a flow chart showing action procedures in course of the electronic commercial transaction;
Fig. 3 is a view showing an example of display of commodity presentation page;
Fig. 4 is a view showing an example of display of commodity data of a specified commodity;
Fig. 5 is a view showing an example of display of orderer information input page;
Fig. 6 is a view showing an example of display of destination information input page;
Fig. 7 is a view showing an example of display of dealing shop presentation page;
Fig. 8 is a view showing an example of display of dealing shop detailed data; and
Fig. 9 is a view showing an example of display of order sheet page.

### DETAILED DESCRIPTION OF THE PREFERRED EMBODIMENT

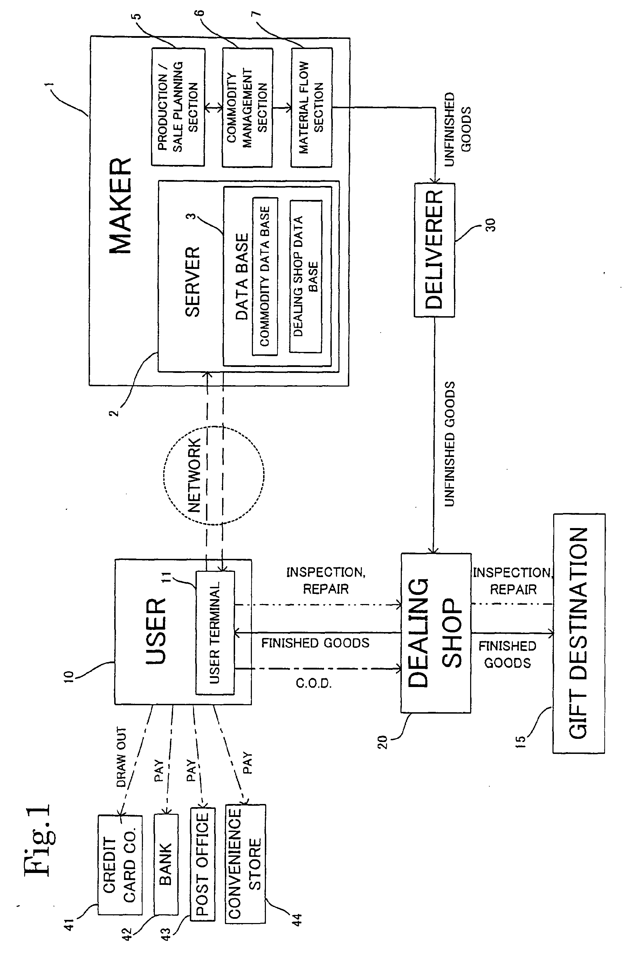

Hereinafter, an embodiment of the present invention will be described with reference to Figs. 1 to 9.

This embodiment is an electronic commercial transaction system for selling a bicycle with assistant electric motor as a commodity.

The electronic commercial transaction system can be used also for selling a usual bicycle, a machine for general use, a motorcar or the like.

In general, the bicycle with assistant electric motor is produced by a maker, sold wholesale to dealing shops all over the country, and directly sold to a consumer coming to the dealing shop. This is a conventional commercial flow.

In parallel with the conventional commercial flow, an EC commercial flow in which a commodity, a transactor and a transacting manner are determined by electronic commercial transaction can be constituted.

For the EC commercial flow, as shown in Fig. 1, the maker 1 ensures special dealing shops 20 that have accepted to deal with inspection and repair of a bicycle with assistant electric motor sold by electronic commercial transaction.

Some of the dealing shops 20 sell only a motorcycle directly but have accepted to deliver, inspect and repair the bicycle with assistant electric motor relating to electronic commercial transaction.

Fig. 1 is a view showing an entire constitution of an electronic commercial transaction system utilizing a network that is an existing network such as inter-net.

The maker 1 of the bicycle with assistant electric motor (a commodity) opens a web site on the network to constitute a server 2 for a user terminal 11 of a user 10. The server 2 and the user terminal 11 can communicate with each other through the network.

The maker 1 has a production/sale planning section 5, a commodity management section 6, a material flow section 7 and the like. The product/sale planning section 5 plans quantity of production and quantity of sale. The planning is carried out regarding the EC commercial flow as well as the conventional commercial flow. The commodity management section 6 carries out stock management in both commercial flows.

The bicycle with assistant electric motor is forwarded to a deliverer 30 at the material flow section 7 and delivered to the dealing shop 20.

The bicycle with assistant electric motor forwarded from the maker 1 is unfinished and in state of an assembling set until it reaches the dealing shop 20. Then, the bicycle is set up at the delivering shop 20 and delivered to a consumer as finished goods.

The user 10 can have the bicycle with assistant electric motor dealt with as a gift. In this case, the user 10 designates a gift destination 15. An assembling set of the bicycle with assistant electric motor delivered to the dealing shop 20 by the deliverer 30 is set up at the dealing shop 20 and delivered to the gift destination 15 as finished goods.

There are various methods for settlement of accounts. Both of on-line settlement and off-line settlement are possible.

In case of the on-line settlement using a credit card, contents of an order and a credit card number are transmitted. Demand of payment is carried out from a credit card company 41, and the price is drawn out from an account.

In case of the off-line settlement, there are payment to a bank 42, payment to a post office 43 and payment to a convenience store 44 using a payment form. Or the price may be paid in exchange for the commodity when the dealing shop 20 delivers the commodity (cash on delivery).

As mentioned above, a system of ED commercial flow is constituted in addition to the convenient commercial flow.

The server 2 is provided with a data base 3, and the data base 3 is provided with a commodity data base having data of various kinds of bicycles with assistant electric motor including picture data recorded so as to retrieved and a dealing shop data base having data of dealing shops all over the country recorded so as to be retrieved.

The dealing shop data base includes map data giving locations of the dealing shops and detailed data giving connecting destinations, open times, contents of service and the like.

Generally, the user terminal 11 is a personal computer at the user's home or a portable telephone. Sometimes it is a computer provided in a convenience store.

The server 2 and the user terminal 11 have respective communication functions and can communicate with each other through the network.

In the server 2, web serve program operates, and in the user terminal 11, web brouser program operates.

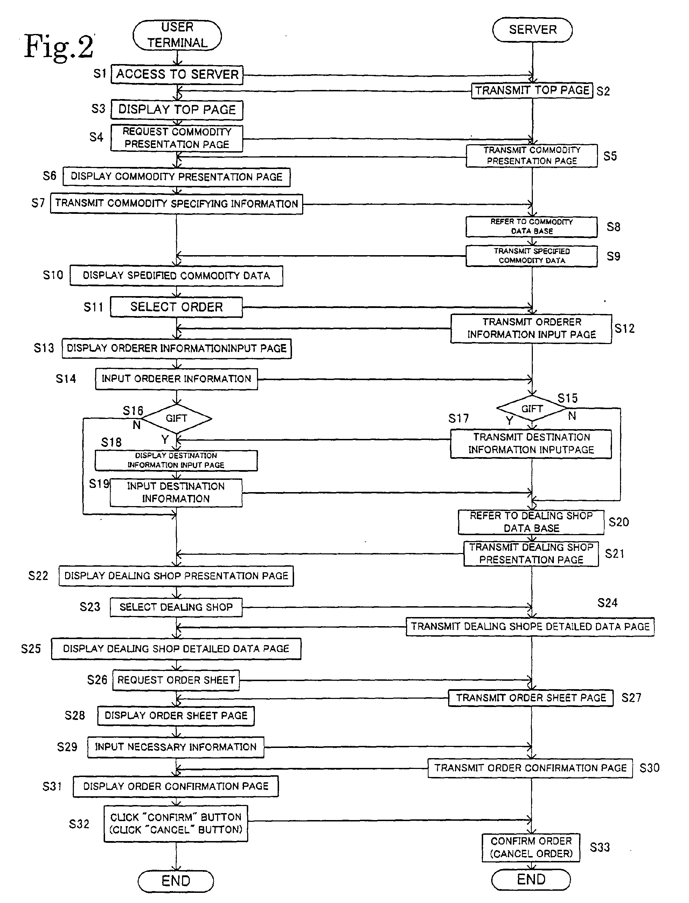

A course of the electronic commercial transaction in which the user 10 communicates with the server 2 through the network to obtain necessary data from the data base 3 of the server 2 will be described according to action procedures shown in Fig. 2.

When the user 10 inputs URL of the server 2 from the user terminal 11 to obtain access to the server (step 1), a top page of the maker 1 is transmitted from the server 2 side (step 2), and the top page is displayed on the user terminal 11 (step 3).

If the top page has a "commodity presentation" button, the button is clicked to request a commodity presentation page (step 4). The commodity presentation page is transmitted from the server 2 side (step 5) and displayed on the user terminal 11 (step 6).

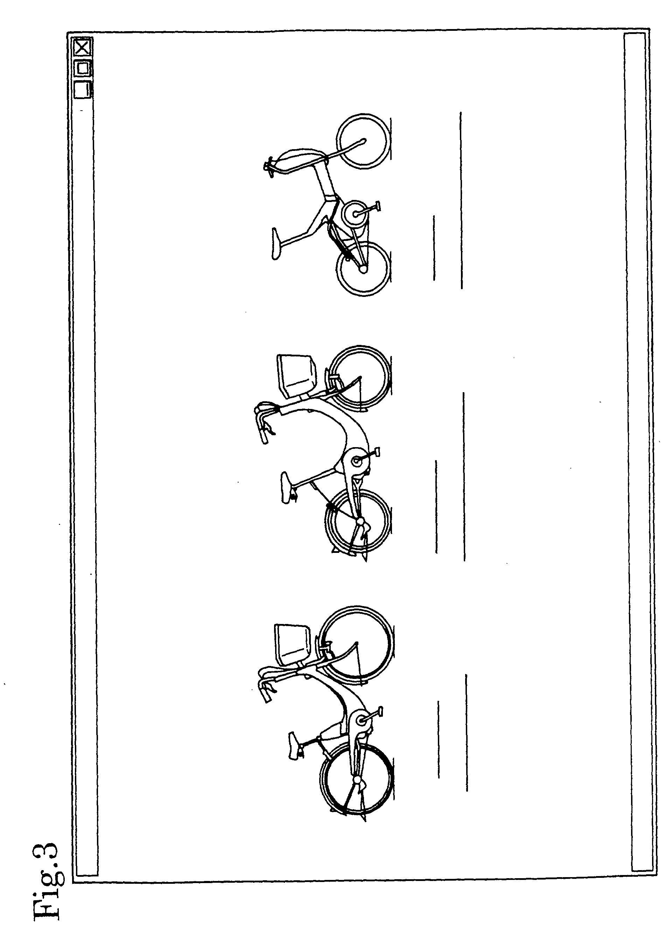

Fig. 3 shows an example of the commodity presentation page in which kinds of the commodities (bicycles with assistant electric motor) are presented together with their pictures. Brief explanations of functions and available body colors are described.

The user selects a commodity watching this page and clicks a picture portion of the selected commodity to transmit commodity specifying information (step 7)

The server side refers to the commodity data base based on the commodity specifying information to specify the commodity (step 8), and transmits retrieved detailed commodity data of the commodity (step 9).

The commodity data of the specified commodity is displayed on the user terminal (step 10).

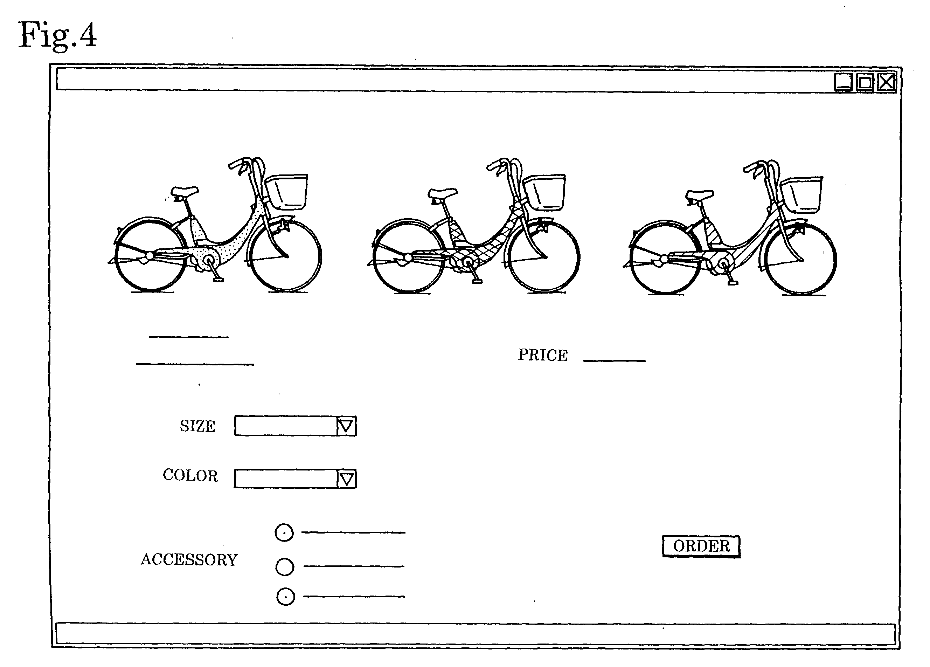

Fig. 4 shows an example of display of the commodity data. Three kinds of the specified commodity are displayed distinguished by colors, and size, body color and accessories can be selected. When "order" button is clicked finally, ordered commodity information is transmitted (step 11).

The server 2 receiving the ordered commodity information transmits an orderer information input page to the user terminal 11 (step 12), and the orderer information input page is displayed at the user terminal 11 (step 13).

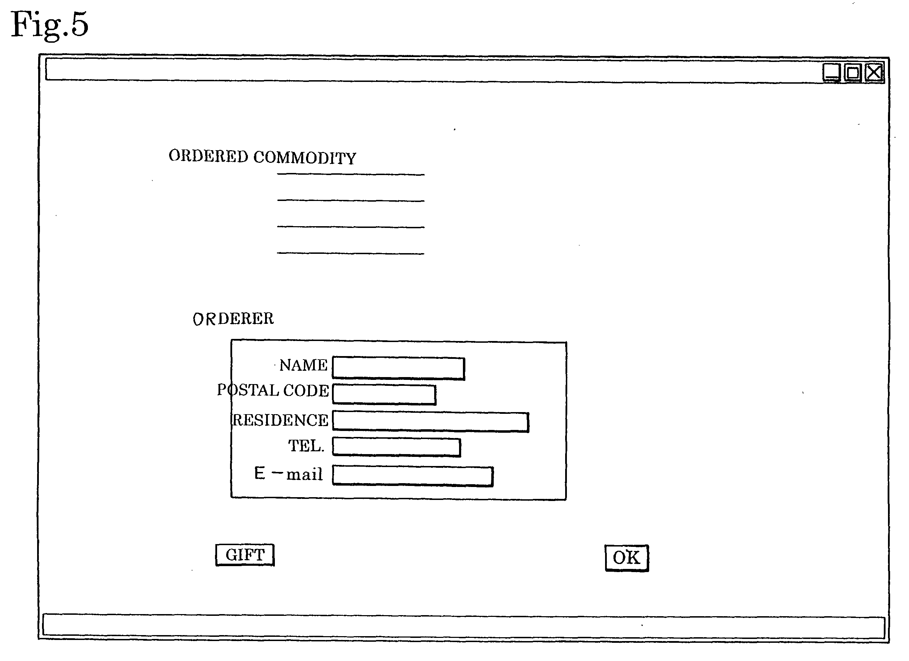

Fig. 5 shows an example of the orderer information input page. The user 10 inputs and transmits necessary information such as name and residence (step 14)

The page has a "gift" button. When the user wants to have the commodity dealt with as a gift, he clicks the "gift" button after inputting the orderer information and then transmits the information (step 14).

When the server 2 recognizes that it is a gift (step 15), the server 2 transmits a destination information input page (step 17).

On the user terminal 11 side, since it is a gift (step 16), the destination information input page is displayed (step 18).

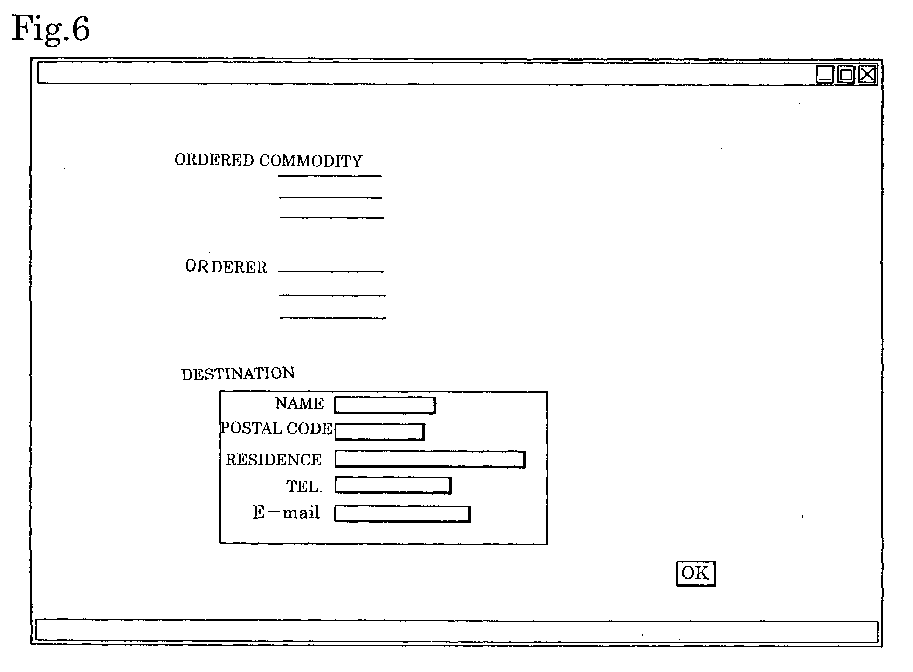

Fig. 6 shows an example of the destination information input page. The user inputs and transmits destination information (step 19). When it is not a gift, the server 2 regards the above-mentioned orderer information as the destination information. The server 2 refers to the dealing shop data base based on the destination information to extract at least one shop near the destination and transmits a dealing shop presentation page to the user terminal 11 (step 21). The dealing shop presentation page is displayed at the user terminal 11 (step 22)

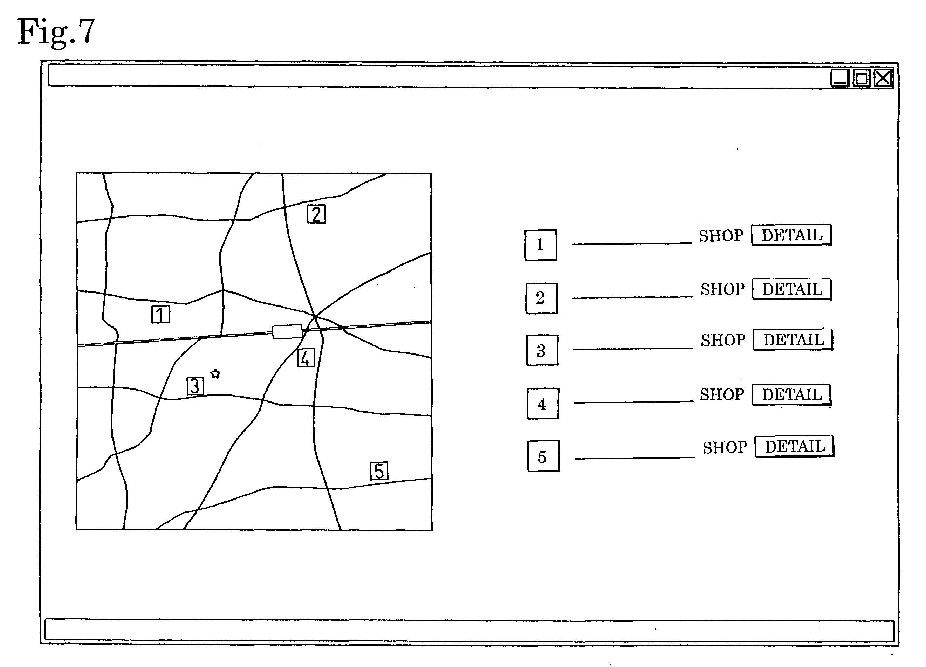

An example of the dealing shop presentation page is shown in Fig. 7. A map in the neighborhood of the destination is displayed. On the map are shown five shops 20 near the destination shown by a star mark. Beside the map are marshaled names of shops together with respective numbers.

The user can select a dealing shop 20 considered to be most convenient watching the map.

In case of Fig. 7, if a dealing shop nearest to the destination is to be selected, it is No. 3 shop, and if a dealing shop nearest to the railway station is to be selected, it is No. 4 shop.

When a dealing shop considered to be most convenient for the orderer or the consignee is selected, the user clicks a "detail" button of a corresponding dealing shop to transmit that the dealing shop is selected (step 23).

The server 2 transmits detailed data of the selected dealing shop (step 24).

The user terminal 11 displays the detailed data of the selected dealing shop (step 25).

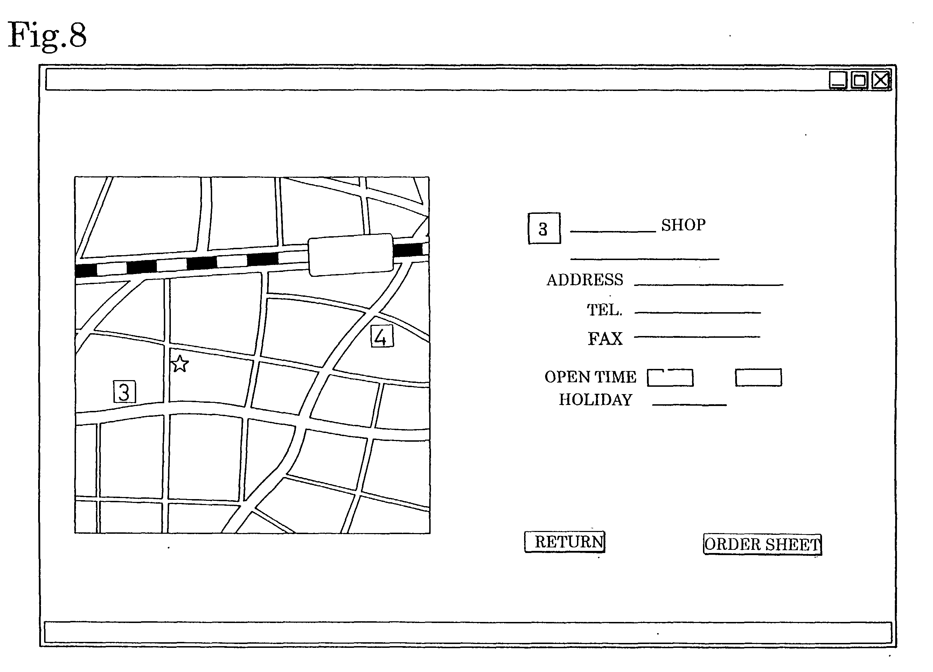

Fig. 8 shows an example of the dealing shop detailed data. A map enlarged further than the map of Fig. 7 is displayed, and detailed data of the selected dealing shop, for example open time, holiday and contents of other service, are displayed.

When the user 10 wants to know detailed data of another dealing shop further, he clicks a "return" button. The dealing shop presentation page of Fig. 7 is displayed again so that he can select another dealing shop.

When the selected dealing shop is to be adopted, an "order sheet" button is clicked to transmit request for order sheet (step 26).

The server 2 receiving this request transmits an order sheet page (step 27).

The order sheet page is displayed at the user terminal (step 28)

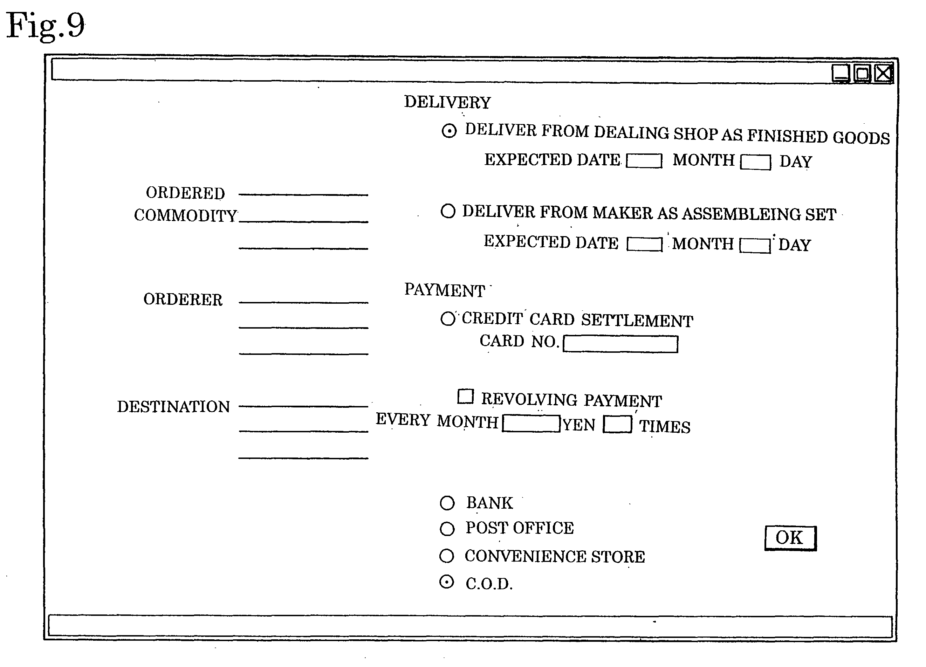

An example of the order sheet page is shown in Fig. 9. There are columns for inputting necessary information, namely for selecting and inputting methods for delivery of the ordered goods and for payment (step 29).

The method for delivery includes a method that the commodity is delivered from the selected dealing shop as a finished goods and a method that the commodity is delivered from the maker directly as an assembling set. The user 10 can select either of the methods. Also expected dates of delivery are shown.

The method for payment includes credit card settlement, bank payment, post office payment, convenience store payment and cash on delivery (C. O. D.). The user can select any of the methods.

When the credit card settlement is selected, it is required to input a card number. Revolving payment by the credit card is also possible. In this case, it is required to input payment amount (constant amount) of every month and times.

When the user 10 inputs and transmits the above-mentioned necessary information (step 29), the server 2 transmits an order confirmation pages to the user terminal 11 (step 30), and the order confirmation page is displayed at the user terminal (step 31).

On the order confirmation page are shown contents of the above-mentioned order sheet. The user 10 confirms that the contents are not erroneous. If the contents are not erroneous, the user clicks a "confirm" button, and if the contents are erroneous, the user corrects the error and then clicks the "confirm" button. When the user wants to cancel the order, he can click a "cancel" button.

The server 2 receiving the confirmation or cancellation confirms the order to accept the order formally or cancels the order (step 23).

As described above, the user 10 can order a necessary commodity easily, by transmitting the order sheet inputted with necessary information from the user terminal 11 utilizing the network.

In course of ordering the commodity, the server 2 refers the dealing shop data base based on the transmitted destination information to extract a dealing shop in the neighborhood of the destination and data of the extracted dealing shop are transmitted to the user terminal 11 for display. Therefore, the user 10 can know a dealing shop considered to be most convenient, receive setup of the commodity from the dealing shop, and purchase the commodity very easily.

When the user 10 wants to inspect or repair the purchased commodity, he can leave it to the dealing shop so that he can receive a careful after service very conveniently.

When the commodity is to be dealt with as a gift, the commodity is delivered from a dealing shop most convenient for the gift destination 15 as a finished goods, therefore when the consignee wants to inspect or repair the gifted commodity, he can leave it to the dealing shop so that he can receive a careful after service very conveniently.

The server 2 refers to the dealing shop data base based on the destination information to extract dealing shops in the neighborhood of the destination and transmits the dealing shop presentation page including map data. When the dealing shop presentation page is displayed on the user terminal 11, as shown in Fig. 7, a map in the neighborhood of the destination is shown and at least a nearest dealing shop is shown by a number on the map. Therefore the user can select a dealing shop 20 considered to be most convenient easily.

Even if there are plural dealing shops displayed, the nearest dealing shop can be selected by grasping positional relations among the dealing shops and the destination visually and location of the nearest dealing shop can be grasped by sense.

Since the user 10 can obtain detailed data of the extracted dealing shop as the dealing shop detailed data page (Fig. 8), he can know details of dealing shops to select a most convenient dealing shop finally.

When the commodity is to be dealt with as a gift, a dealing shop considered to be most convenient for the consignee can be selected.

Since the EC commercial flow is carried out independently of the conventional commercial flow, the production/sale planning section 5 of the maker 1 plans so that an exclusive stock for the EC commercial flow is ensured independently of a stock for the conventional commercial flow, and when a commodity is sold by the EC commercial flow, the commodity is taken out from the exclusive stock.

Thus, commodities for the conventional commercial flow which are forwarded in large quantity with relatively long cycle and commodities for the EC commercial flow which are forwarded in small quantity with short cycle are not mixed as a stock. Therefore, even if forwarding by the EC commercial flow is required immediately after a large quantity forwarding, it is possible to cope with the situation and delay of delivery to the consumer can be prevented.

The dealing shop can have a chance to obtain a new customer in addition to customers by the conventional commercial flow.

The consumer can know a near dealing shop, therefore, if necessary, he can have a look at a displayed commodity actually at the dealing shop or ride on it for trial before he purchases it.

In the above embodiment, the commodity is a bicycle with assistant electric motor, but the present invention can be applied to other various commodities such as a motorcycle, a machine for general use and a motorcar.

An electronic commercial transaction system, and a server, a user terminal and a record medium for the system are provided. The user can purchase a commodity easily and receive a careful inspection and repair of the commodity conveniently. The server comprises a commodity data base, a dealing shop data base, commodity specifying means, dealing shop extracting means, and server side transmission means for transmitting commodity data of a specified commodity, dealing shop data of an extracted dealing shop and an order sheet to the user terminal. The user terminal comprises display means for displaying the commodity data, the dealing shop data and the order sheet on a display surface, and user side transmission means for transmitting commodity specifying information, destination information and order sheet input information to the server.

By a stock management method wherein stocks relating to EC commercial flow and stocks relating to conventional commercial flow are managed separately, flow of commodities can be made smooth.

## Claims

1. An electronic commercial transaction system including a server and a plurality of user terminals capable of communicating with each other through a network,
said server comprising:
a commodity data base having commodity data of various kinds of commodities recorded so as to be retrieved;
a dealing shop data base having dealing shop data of dealing shops carrying out inspection, repair and delivery of said commodities including address recorded so as to be retrieved;
commodity specifying means for referring to said commodity data base based on commodity specifying information transmitted from said user terminal to specify a necessary commodity;
dealing shop extracting means for referring to said dealing shop data base based on destination information transmitted from said user terminal to extract at least a dealing shop in neighborhood of said destination; and
server side transmission means for transmitting commodity data of said commodity specified by said commodity specifying means, dealing shop data of said dealing shop extracted by said dealing shop extracting means and an order sheet to said user terminal,
said user terminal comprising:
display means for displaying said commodity data, said dealing shop data and said order sheet transmitted from said server side transmission means on a display surface; and
user terminal side transmission means for transmitting said commodity specifying information, said destination information and an order sheet input information to said server.

2. An electronic commercial transaction system as claimed in claim 1, wherein said dealing shop data of said dealing shop extracted by said dealing shop extracting means include a map of neighborhood of said destination showing places of said destination and said extracted dealing shop, and said display means of said user terminal displays said map.

3. A server comprising:
a commodity data base having commodity data of various kinds of commodities recorded so as to be retrieved;
a dealing shop data base having dealing shop data of dealing shops carrying out inspection, repair and delivery of said commodities including address recorded so as to be retrieved;
commodity specifying means for referring to said commodity data base based on commodity specifying information transmitted from a user terminal through a network to specify a necessary commodity;
dealing shop extracting means for referring to said dealing shop data base based on destination information transmitted from said user terminal through said network to extract at least a dealer shop in neighborhood of said destination; and
server side transmission means for transmitting commodity data of said commodity specified by said commodity specifying means, dealing shop data of said dealing shop extracted by said dealing shop extracting means and an order sheet to said user terminal.

4. A server as claimed in claim 3, wherein said server has dealing shop specifying means for specifying a necessary dealing shop from among said dealing shops extracted by said dealing shop extracting means based on dealing shop specifying information transmitted from said user terminal through said network, and said server side transmission means transmits detailed data of said dealing shop specified by said dealing shop specifying means to said user terminal.

5. A server as claimed in claim 3 or 4. wherein said dealing shop data of said dealing shop extracted by said dealing shop extracting means include a map of neighborhood of said destination showing places of said destination and said extracted dealing shop.

6. A user terminal comprising:
access means for obtaining access to a server including a commodity data base having commodity data of various kinds of commodities recorded so as to be retrieved, and dealing shop data base having dealing shop data of dealing shops carrying out inspection, repair and delivery of said commodities including address recorded so as to be retrieved;
display means for displaying said commodity data, said dealing shop data and an order sheet transmitted from said server on a display surface; and
user side transmission means for transmitting commodity specifying information, destination information and order sheet input information to said server through said network.

7. A user terminal claimed in claim 6, wherein said user side transmission means transmits dealing shop specifying information for specifying a dealing shop, and said display means displays detailed data of said specified dealing shop.

8. A user terminal as claimed in claim 6 or 7, wherein said dealing shop data include a map of neighborhood of said destination showing places of said destination and said extracted dealing shop, and said display means displays said map.

9. A record medium housing a program for controlling a computer so that:
said computer refers to a commodity data base based on commodity specifying information transmitted from a user terminal to specify a necessary commodity and transmits commodity data of said necessary commodity through a network;
said computer refers to a dealing shop data base based on destination information transmitted from said user terminal to extract at least a dealing shop in neighborhood of said destination and transmits dealing shop data of said dealing shop through said network; and
said computer transmits an order sheet through said network.

10. A record medium housing a program for controlling a computer so that:
said computer refers to a commodity data base based on commodity specifying information transmitted from a user terminal to specify a necessary commodity and transmits commodity data of said necessary commodity through a network;
said computer refers to a dealing shop data base based on destination information transmitted from said user terminal to extract at least a dealing shop in neighborhood of said destination and transmits dealing shop data of said dealing shop through said network;
said computer specifies a necessary dealing shop from among said extracted dealing shops based on dealing shop specifying information transmitted from said user terminal and transmits dealing shop detailed data of said specified dealing shop through said network; and
said computer transmits an order sheet through said network.

11. An electronic commercial transaction system including a server and a plurality of user terminals capable of communicating with each other through a network,
said server comprising:
a commodity data base having commodity data of various kinds of commodities recorded so as to be retrieved;
a dealing shop data base having dealing shop data of dealing shops carrying out inspection, repair and delivery of said commodities including address recorded so as to be retrieved;
commodity specifying means for referring to said commodity data base based on commodity specifying information regarding a commodity to be dealt with as a gift transmitted from said user terminal to specify a necessary commodity;
dealing shop extracting means for referring to said dealing shop data base based on consignee information regarding a consignee of said gift transmitted from said user terminal to extract at least a dealing shop in neighborhood of said consignee; and
server side transmission means for transmitting commodity data of said commodity specified by said commodity specifying means, dealing shop data of said dealing shop extracted by said dealing shop extracting means and an order sheet to said user terminal,
said user terminal comprising:
display means for displaying said commodity data, said dealing shop data and said order sheet transmitted from said server side transmission means on a display surface; and
user terminal side transmission means for transmitting said commodity specifying information, said consignee information and an order sheet input information to said server.

12. An electronic commercial transaction system as claimed in claim 11, wherein said dealing shop data of said dealing shop extracted by said dealing shop extracting means include a map of neighborhood of said consignee showing places of said consignee and said dealing shop, and said display means of said user terminal displays said map.

13. A server comprising:
a commodity data base having commodity data of various kinds of commodities recorded so as to be retrieved;
a dealing shop data base having dealing shop data of dealing shops carrying out inspection, repair and delivery of said commodities including addresses recorded so as to be retrieved;
commodity specifying means for referring to said commodity data base based on commodity specifying information regarding a commodity to be dealt with as a gift transmitted from a user terminal to specify a necessary commodity;
dealing shop extracting means for referring to said dealing shop data base based on consignee information regarding a consignee of said gift transmitted from said user terminal to extract at least a dealing shop in neighborhood of said consignee; and
server side transmission means for transmitting commodity data of said commodity specified by said commodity specifying means, dealing shop data of said dealing shop extracted by said dealing shop extracting means and an order sheet to said user terminal.

14. A server as claimed in claim 13, wherein said server has dealing shop specifying means for specifying a necessary dealing shop from among dealing shops extracted by said dealing shop extracting means based on dealing shop specifying information transmitted from said user terminal through a network, and said server side transmission means transmits detailed data of dealing shop specified by said dealing shop specifying means to said user terminal.

15. A server as claimed in claim 13 or 14, wherein said dealing shop data of said dealing shop extracted by said dealing shop extracting means include a map of neighborhood of said consignee showing places of said consignee and said dealing shop.

16. A user terminal comprising:
access means for obtaining access to a server including a commodity data base having commodity data of various kinds of commodities recorded so as to be retrieved, and dealing shop data base having dealing shop data of dealing shops carrying out inspection, repair and delivery of said commodities including addresses recorded so as to be retrieved;
display means for displaying said commodity data, said dealing shop data and an order sheet transmitted from said server on a display surface; and
user side transmission means for transmitting commodity specifying information for specifying a necessary commodity from said commodity data base, consignee information for extracting a dealing shop in neighborhood of said consignee of said gift from said dealing shop data base and an order sheet input information through a network to said server.

17. A user terminal as claimed in claim 16, wherein said user side transmission means transmits dealing shop specifying information for specifying a dealing shop, and said display means displays detailed data of said specified dealing shop.

18. A user terminal as claimed in claim 16 or 17, wherein said dealing shop data include a map of neighborhood of said consignee showing places of said consignee and said extracted dealing shop, and said display means displays said map.

19. A record medium housing a program for controlling a computer so that:
said computer refers to a commodity data base based on commodity specifying information regarding a commodity to be dealt with as a gift transmitted from a user terminal to specify a necessary commodity and transmits commodity data of said necessary commodity through a network;
said computer refers to a dealing shop data base based on consignee information regarding a consignee of said gift transmitted from said user terminal to extract at least a dealing shop in neighborhood of said consignee and transmits dealing shop data of said extracted dealing shop through said network; and
said computer transmits an order sheet through said network.

20. A record medium housing a program for controlling a computer so that:
said computer refers to a commodity data base based on commodity specifying information regarding a commodity to be dealt with as a gift transmitted from a user terminal to specify a necessary commodity and transmits commodity data of said necessary commodity through a network;
said computer refers to a dealing shop data base based on consignee information regarding a consignee of said gift transmitted from said user terminal to extract at least a dealing shop in neighborhood of said consignee and transmits dealing shop data of said extracted dealing shop through said network;
said computer specifies a necessary dealing shop from among said extracted shops based on dealing shop specifying information transmitted from said user terminal and transmits dealing shop detailed data of said necessary dealing shop through said network; and
said computer transmits an order sheet through said network.

21. A stock management method, wherein an EC commercial flow in which electronic commercial transaction is carried out between a server and a plurality of user terminals capable of communicating with each other through a network to determine a commodity, a transactor and a transacting manner, and a conventional commercial flow in which commodities sold wholesale to a selling shop are sold directly, coexist, and stocks relating to said EC commercial flow and stocks relating to said conventional commercial flow are managed separately.

22. A stock management method as claimed in claim 21, wherein
said server comprising:
a commodity data base having commodity data of various kinds of commodities recorded so as to be retrieved;
a dealing shop data base having dealing shop data of dealing shops carrying out inspection, repair and delivery of said commodities including address recorded so as to be retrieved;
commodity specifying means for referring to said commodity data base based on commodity specifying information transmitted from said user terminal to specify a necessary commodity;
dealing shop extracting means for referring to said dealing shop data base based on destination information transmitted from said user terminal to extract at least a dealing shop in neighborhood of said destination; and
server side transmission means for transmitting commodity data of said commodity specified by said commodity specifying means, dealing shop data of said dealing shop extracted by said dealing shop extracting means and an order sheet to said user terminal,
said user terminal comprises:
display means for displaying said commodity data, said dealing shop data and said order sheet transmitted from said server side transmission means on a display surface; and
user terminal side transmission means for transmitting said commodity specifying information, said destination information and an order sheet input information to said server.

23. A stock management method as claimed in claim 22, wherein said dealing shop data of said dealing shop extracted by said dealing shop extracting means include a map of neighborhood of said destination showing places of said destination and said extracted dealing shop, and said display means of said user terminal displays said map.
